# EUROPÄISCHE PATENTSCHRIFT

(11) **EP 3 113 887 B1**
(45) Veröffentlichungstag und Bekanntmachung des Hinweises auf die Patenterteilung: **14.02.2018**
(21) Anmeldenummer: 15707930.2
(22) Anmeldetag: 03.03.2015
(51) Int. Cl.: B05B 1/30, B05B 7/06, B05B 15/06, B08B 3/02, F16K 1/38, F16K 31/122, F16K 31/46

(54) **VERLÄNGERUNGSVORRICHTUNG FÜR SPRITZAPPARATE UND SPRITZAPPARAT**
EXTENSION DEVICE FOR SPRAYING DEVICES AND SPRAYING DEVICE
DISPOSITIF D'EXTENSION POUR APPAREILS DE PULVÉRISATION ET APPAREILS DE PULVÉRISATION

(30) Priorität: 05.03.2014 DE 102014204012
(43) Veröffentlichungstag der Anmeldung: 11.01.2017
(73) Patentinhaber: Krautzberger GmbH, 65343 Eltville (DE)
(72) Erfinder: WEIDMANN, Thomas, 56355 Bettendorf (DE)
(74) Vertreter: Mehler Achler
(86) Internationale Anmeldenummer: PCT/EP2015/054366
(87) Internationale Veröffentlichungsnummer: WO 2015/132235

(56) Entgegenhaltungen:
- DE-U1- 20 116 060
- GB-A- 2 078 137
- US-A- 1 712 195
- US-A1- 2007 170 285

## Beschreibung

Die vorliegende Erfindung betrifft eine Verlängerungsvorrichtung für Spritzapparate mit einer Verlängerungseinheit, die an einem ersten Ende einen Spritzkopf mit mindestens einer Materialaustrittsdüse und an einem zweiten Ende Mittel zum Anschließen eines Spritzapparates aufweist. Zusätzlich betrifft die vorliegende Erfindung einen Spritzapparat zum Verspritzen von Material auf Oberflächen gemäß Anspruch 16.

Spritzapparate gehören seit langer Zeit zum bekannten Stand der Technik und kommen in den unterschiedlichsten Bereichen zum Zwecke der Reinigung, der Desinfektion, der Oberflächenbehandlung oder der Beschichtung von Werkstücken zum Einsatz. Der prinzipielle Aufbau der Spritzapparate weist im Wesentlichen einen Grundkörper mit Ventilen für das zu verspritzende Material, eine Materialnadel, einen Spritzkopf mit Materialaustrittsdüse und ggf. Luftdüsen sowie eine Betätigungseinrichtung zum Auslösen und Beenden des Spritzvorgangs auf.

Solch ein Spritzapparat ist beispielsweise aus der US 1 712 195 A bekannt.

Unter dem zu verspritzenden Material werden sowohl flüssige als auch pastöse Medien verstanden. Es können sowohl hoch- als auch niedrigviskose Spritzmaterialien verarbeitet werden.

Um die vielfältigen Einsatzmöglichkeiten der Spritzapparate an die unterschiedlichen Geometrien und Beschaffenheiten der Werkstücke anzupassen, sind zahlreiche Adapter oder Verlängerungsvorrichtungen bekannt, die zwischen dem Spritzkopf und dem Grundkörper des Spritzapparates angeordnet werden.

Beispielsweise ist aus der Patentschrift DE 1 005 783 eine Verlängerungsvorrichtung mit einem starren, geraden Strahlrohr bekannt, welches auch als Sprühlanze bezeichnet wird, die zum Bespritzen von Bäumen, Sträuchern oder dergleichen sowie für industrielle Zwecke zum Einsatz kommt. Im Spritzkopf des Strahlrohrs sind Düsen mit Ventilen angeordnet, die mit ihren Ventiltellern vor den Eintrittsöffnungen der Düsen angeordnet sind. Durch Drehen eines drehbaren Körpers können die in dem Spritzkopf angeordneten unterschiedlichen Düsen angesteuert werden, wodurch verschiedene Sprühmodi einstellbar sind. Die dem Spritzkopf gegenüberliegende Seite des Strahlrohrs ist an einem Grundkörper eines Spritzapparates anbringbar.

Aus der DE 20 2004 018 903 U1 ist eine Sprühlanze für eine Hochdruckreinigungsvorrichtung bekannt, wobei die Sprühlanze einen Schlauch mit einer Düse und ein Halteteil aufweist, an dem der Schlauch befestigt ist. Eine andere Ausführung sieht anstelle des Schlauchs ein starres Rohr vor, wobei die Düse um eine Schwenkachse quer zu ihrer Hauptsprührichtung, insbesondere jedoch quer zur Längserstreckung der Sprühlanze oder des Handgriffs, schwenkbar angeordnet ist.

Aus der DE 100 56 040 A1 ist eine Verlängerungseinrichtung bekannt, die ein Verlängerungsrohr umfasst, das an einem Ende eine eigene Steuereinrichtung mit Schlauchanschlüssen und am anderen Ende einen Spritzkopf mit einer Materialaustrittsdüse aufweist. Der Spritzkopf weist eine mittels Druckluft gesteuerte Materialnadel auf, mit der die Materialaustrittsdüse geöffnet und verschlossen werden kann. Benachbart zur Materialaustrittsdüse sind am Spritzkopf Düsenhörner mit Luftdüsen angeordnet. Der Spritzkopf ist mit im Innern des Verlängerungsrohrs verlegten Schläuchen mit der Steuereinrichtung verbunden.

Diese Verlängerungsvorrichtung hat den Nachteil, dass eine zusätzliche Steuereinrichtung, insbesondere für die Betätigung der nur im Spritzkopf befindlichen Materialnadel, erforderlich ist und dass die üblicherweise im Spritzapparat befindliche mechanische Betätigungseinrichtung nicht unmittelbar genutzt werden kann. Außerdem ist der Spritzkopf durch die Druckluftbetätigungsmittel für die Materialnadel deutlich aufwändiger ausgeführt. Die Verlängerungseinrichtung ist dadurch insgesamt teurer in der Herstellung als Verlängerungsvorrichtungen, bei denen die Materialnadel von dem Spritzapparat durch das Verlängerungsrohr zur Materialaustrittsdüse geführt wird.

Eine solche Vorrichtung ist beispielsweise aus der DE - PS 585239 bekannt. Der Spritzkopf ist einfacher ausgeführt als bei der DE 100 56 040 A1, allerdings ist die Länge der Verlängerungseinrichtung durch mehrere Faktoren limitiert.

Die im Verlängerungsrohr sich über die gesamte Länge erstreckende Materialnadel erhöht das Gesamtgewicht der Verlängerungseinrichtung, so dass Verlängerungsvorrichtungen von mehreren Metern Länge nicht mehr handhabbar sind. Bei derart großen Längen biegt sich die Materialnadel durch und muss im Verlängerungsrohr ggf. zusätzlich gestützt werden, was nicht nur das Gewicht weiter erhöht sondern auch die Herstellkosten.

Ein weiterer Nachteil besteht darin, dass sich beispielsweise abgewinkelte Verlängerungsvorrichtungen nicht realisieren lassen, ohne dass weitere Nachteile in Kauf genommen werden müssen. Die starre Materialnadel kann vom Spritzapparat nur bis zum Knick des Verlängerungsrohrs geführt werden, wo dann auch eine Düse angeordnet werden muss, mit der die Materialnadel zusammenwirkt. Zwischen dieser Düse und dem am vorderen Ende der Verlängerungsverrichtung angeordneten Spritzkopf, wo das Material durch die eigentliche Materialaustrittsdüse austritt, befindet sich im Verlängerungsrohr ein unter Umständen großes Volumen. Nach dem Schließen der Düse mittels der Materialnadel verbleibt Material in diesem Volumen, das durch die ständig offene Materialaustrittsdüse unbeabsichtigt austreten kann.

Es ist daher Aufgabe der Erfindung, eine Verlängerungseinrichtung bereitzustellen, die sich auch bei großen Längen durch ein geringes Gewicht und einen einfachen Aufbau auszeichnet, wobei die Menge des zu verspritzenden Material, das unbeabsichtigt austreten kann, minimiert werden soll.

Diese Aufgabe wird mit einer Verlängerungsvorrichtung mit den Merkmalen des Anspruchs 1 und mit einem Spritzapparat gemäß Anspruch 16 gelöst.

Die Verlängerungsvorrichtung ist sieht vor, dass die Verlängerungseinheit ein Dosier- und Absperrventil aufweist, das ein Ventilsitzelement mit einer Ventilöffnung und einen Ventilkörper aufweist, dass der Ventilkörper zwischen dem Spritzkopf und dem Ventilsitzelement angeordnet ist, und dass der Ventilkörper an einem Zugübertragungselement befestigt ist, das sich durch die Ventilöffnung erstreckt und dass das Zugübertragungselement aus einem biegsamen Material besteht.

Das Dosier- und Absperrventil ist vorzugsweise innerhalb der Verlängerungseinheit vorzugsweise im ersten Ende der Verlängerungseinheit oder am ersten Ende der Verlängerungseinheit angeordnet.

Der Ventilkörper ist vorzugweise vor der Materialaustrittsdüse des Spritzkopfes angeordnet.

Der Ventilkörper kann in den Spritzkopf hineinragen. Der Ventilkörper wirkt nicht mit der Materialaustrittsdüse zusammen.

Das Dosier- und Absperrventil ist vorzugsweise vor dem Spritzkopf und somit in Strömungsrichtung des Materials vor der Materialaustrittsdüse angeordnet. Eine möglichst dichte Anordnung des Dosier- und Absperrventils vor dem Spritzkopf bzw. vor der Materialaustrittsdüse des Spritzkopfes hat den Vorteil, dass der Raum zwischen dem Dosier- und Absperrventil und der Materialaustrittsdüse klein gehalten werden kann. Die Materialverluste bzw. die Materialreste werden dadurch erheblich verringert.

Wenn das Dosier- und Absperrventil am ersten Ende der Verlängerungseinheit angeordnet ist, ist der Spritzkopf am ersten Ende der Verlängerungseinheit und/oder am Dosier- und Absperrventil angeordnet.

Das Dosier- und Absperrventil weist ein Ventilsitzelement mit einer Ventilöffnung auf, mit der ein Ventilkörper zusammenwirkt. Die herkömmliche starre Materialnadel ist durch den Ventilkörper und ein daran befestigtes Zugübertragungselement ersetzt, wobei der Ventilkörper zwischen dem Spritzkopf und dem Ventilsitzelement angeordnet ist. Der Ventilkörper befindet sich somit zwischen der Materialaustrittsdüse und der Ventilöffnung.

Diese Anordnung hat den Vorteil, dass der Druck des zu verspritzenden Materials zum Öffnen des Dosier- und Absperrventils genutzt werden kann. Das durch die Ventilöffnung gedrückte Material bewegt den Ventilkörper von der Ventilöffnung in Richtung Materialaustrittsdüse, wodurch die Ventilöffnung geöffnet wird. Zum Verschließen der Ventilöffnung wird der Ventilkörper mittels des Zugübertragungselementes in die entgegengesetzte Richtung gezogen. Da das Zugübertragungselement nur zum Schließen des Dosier- und Absperrventils, aber nicht zum Öffnen des Dosier- und Absperrventils benötigt wird, muss es nicht starr ausgebildet sein wie eine herkömmliche Materialnadel. Dies eröffnet die Möglichkeit, das Zugübertragungselement einfacher und insbesondere biegsam auszuführen, so dass die Verlängerungseinheit auch gekrümmt oder gebogen ausgeführt werden kann.

Beim Zurückziehen des Ventilkörpers bewegt sich der Ventilkörper zunehmend an das Ventilsitzelement heran und verschließt die Ventilöffnung letztendlich vollständig. Je nach Bauweise des Dosier- und Absperrventils kann mittels des Zugübertragungselementes bereits durch geringes Bewegen des Ventilkörpers an das Ventilsitzelement der effektive Innendurchmesser des Drossel- und Absperrventils verändert werden, wodurch der Materialstrom gesteuert werden kann. Da das Zugübertragungselement durch die Ventilöffnung geführt ist, wird der Ventilkörper beim Schließvorgang automatisch vor die Ventilöffnung gezogen, so dass immer ein dichter Verschluss gewährleistet wird.

Um den Durchtritt von Spritzmaterial durch die Ventilöffnung zu gewährleisten, ist der Querschnitt der Ventilöffnung größer als der Querschnitt des Zugübertragungselementes.

Das Öffnen des Ventils erfolgt durch Lösen oder Aufheben der auf das Zugübertragungselement wirkenden Zugkräfte. Infolge des Materialdrucks des innerhalb der Verlängerungsvorrichtung zwischen zweitem Ende der Verlängerungseinheit und Dosier- und Absperrventil befindlichen Materials wird der Ventilkörper aus dem Ventilsitzelement in Richtung des ersten Endes der Verlängerungseinheit herausgedrückt oder von dem Ventilsitzelement weggedrückt. Der Ventilkörper wird soweit in Richtung des ersten Endes der Verlängerungseinheit gedrückt, wie es durch die maximale Länge des Zugübertragungselementes möglich ist.

Vorzugsweise ist das Zugübertragungselement mit einer im Spritzapparat angeordneten Betätigungseinrichtung des Spritzapparates verbindbar, was den Vorteil hat, dass diese Einrichtung genutzt und zusätzliche Betätigungseinrichtungen im Spritzkopf, wie dies beim Stand der Technik gemäß der DE 100 56 040 A1 der Fall ist, entbehrlich sind. Der Aufbau der Verlängerungseinrichtung wird dadurch weiter vereinfacht und die Herstellkosten werden gering gehalten.

Durch diese Verbindbarkeit kann das Zugübertragungselement komfortabel vom Spritzapparat aus betätigt werden. Von der Betätigungseinrichtung werden somit Zugkräfte über das Zugübertragungselement an den Ventilkörper übertragen. Zudem bietet diese Verbindbarkeit die Möglichkeit, einen Spritzapparat mit verschiedenen Verlängerungsvorrichtungen zu bestücken. Desweiteren ist ein entsprechender Austausch der Verlängerungsvorrichtung sehr schnell und kostengünstig zu vollziehen.

Um diese Zugkräfte auch zuverlässig zu übertragen, ist das Zugübertragungselement vorzugsweise an den Ventilkörper angelötet, geschweißt oder geklebt. Auch eine Verbindung mittels Klemmung ist möglich.

Das Zugübertragungselement kann z. B. aus einem Seil, Kabel, Draht oder einer Kette bestehen.

Das Zugübertragungselement kann deutlich geringere Materialquerschnitte aufweisen als dies bei einer herkömmlichen Materialnadel der Fall ist, da das Zugübertragungselement nur auf Zug beansprucht wird. Dies hat den Vorteil, dass Gewicht eingespart wird und dass Verlängerungsvorrichtungen, die eine Länge von mehreren Metern aufweisen, noch handhabbar sind. Vorzugsweise weist die Verlängerungseinheit eine Länge von mindestens 0,5 m, insbesondere von mindestens 1 m oder mindestens 2 m auf. Die Verlängerungseinheit kann eine Länge bis 5 m oder sogar bis 10 m aufweisen.

Das Zugübertragungselement ermöglicht eine Kraftübertragung zwischen zweitem Ende der Verlängerungseinheit und dem Ventilkörper, unabhängig von der Form der Verlängerungseinheit, d. h. unabhängig davon, ob die Verlängerungseinheit Krümmungen aufweist oder gerade ausgebildet ist. Ein flexibles, d. h. biegsames Zugübertragungselement, passt sich an jede Form der Verlängerungseinheit an, ohne in deren Funktion eingeschränkt zu werden. Um die Funktion des Zugübertragungselementes, den Ventilkörper in axialer Richtung der Verlängerungseinheit in Richtung des zweiten Endes der Verlängerungseinheit zu ziehen, gewährleisten zu können, darf sich dessen Flexibilität nicht auf die axiale Richtung der Verlängerungseinheit beziehen.

Durch die Verwendung z. B. eines Kabels oder Seils kann die Biegsamkeit des Zugübertragungselementes auf eine einfache, kostengünstige und praktikable Weise realisiert werden. Desweiteren ist es sehr einfach, ein Seil oder Kabel durch die Verlängerungseinheit der Verlängerungsvorrichtung zu verlegen, insbesondere dann, wenn die Verlängerungseinheit Krümmungen aufweist.

Das Zugübertragungselement besteht vorteilhafterweise wenigstens teilweise aus Metall oder einer Legierung oder aus Kunststoff oder einer Kombination hieraus.

Zugübertragungselemente aus diesen Materialien weisen je nach Durchmesser eine gute Flexibilität in radialer Richtung und eine sehr geringe Flexibilität in axialer Richtung auf und sind somit als Übertragung von Zugkräften gut geeignet. Desweiteren kann durch Wahl der unterschiedlichen Materialien das Zugübertragungselement jeweils an die entsprechenden Anforderungen angepasst werden. So weisen gerade Metalle oder Legierungen beispielsweise eine erhöhte Langzeitstabilität auf, während Kunststoffe unempfindlich gegenüber sauren oder basischen Spritzmaterialien sein können.

In einer ebenfalls vorteilhaften Ausführungsform der erfindungsgemäßen Verlängerungsvorrichtung ist die Verlängerungseinheit wenigstens teilweise gekrümmt.

Die Stärke der Krümmung kann beliebig gewählt werden. Die Verlängerungseinheit kann lediglich eine Krümmung oder auch mehrere hintereinander vorgesehene Krümmungen aufweisen. Unter Krümmung wird hierbei jede Abweichung von einer Geraden verstanden.

Durch eine wenigstens teilweise Krümmung der Verlängerungseinheit kann die Verlängerungsvorrichtung an unterschiedliche zu bearbeitenden Werkstücke angepasst werden. Durch die Wahl entsprechender Krümmungen können auch Hinterschneidungen oder Hohlräume der Werkstücke mit dem ersten Ende der Verlängerungseinheit erreicht werden und mit Spritzmaterial behandelt oder beschichtet werden. Aufgrund der Biegsamkeit des Zugübertragungselementes passt sich das Zugübertragungselement den jeweiligen Krümmungen der Verlängerungseinheit entsprechend an.

Vorzugsweise besteht die Verlängerungseinheit aus einem verformbaren, vorzugsweise plastisch verformbaren Material und/oder die Verlängerungseinheit weist mindestens einen verformbaren Abschnitt auf. Plastisch verformbare Materialien können Metalle, Legierungen oder Kunststoffe sein. Verformbare Abschnitte können zwischen nicht verformbaren Abschnitten angeordnet sein. Solche verformbaren Abschnitte können aus verformbaren Materialien oder auch aus einer faltenbalgähnlichen Konstruktion bestehen. Solche Faltenbalg- oder Ziehharmonika-ähnlichen Abschnitte sind an der gekrümmten Stelle vorzugsweise formstabil, insbesondere formstabil hinsichtlich ihrer Durchmesser.

In einer ersten Ausführungsform ist das Ventilsitzelement eine Ringscheibe und der Ventilkörper ein Ventilteller.

Ringscheiben und Ventilteller sind preiswerte Werkstücke, die zudem unkompliziert in der Verlängerungseinheit angeordnet werden können.

Eine Ringscheibe kann mit unterschiedlichen Öffnungsdurchmessern hergestellt werden, die zudem zentral oder dezentral innerhalb der Ringscheibe plazierbar ist. Somit erhält man durch die Verwendung einer Ringscheibe als Ventilsitzelement die Möglichkeit, dieses an die unterschiedlichsten Anforderungsmerkale der Verlängerungsvorrichtung anzupassen.

Gemäß einer weiteren Ausführungsform weisen das Ventilsitzelement und der Ventilkörper jeweils eine kegelförmige oder kegelstumpfförmige Gestalt auf.

Ein kegelförmiger oder kegelstumpfförmiger Ventilkörper, dessen Querschnitt sich in Richtung des zweiten Endes der Verlängerungseinheit verjüngt, ist ein stromlinienförmiger Ventilkörper. Durch eine derartige Ausgestaltung werden Verwirbelungen des Spritzmaterials, welches an dem Ventilkörper vorbeiströmt, stark verringert. Somit wird ein homogener und konstanter Materialaustritt aus dem ersten Ende der Verlängerungsvorrichtung gewährleistet.

Vorzugsweise weist das Ventilsitzelement eine erste konische Fläche und der Ventilkörper eine zweite konische Fläche auf. Die konischen Flächen sind aneinander angepasst, so dass der Ventilkörper in Schließstellung mit seiner zweiten konischen Fläche an der ersten konischen Fläche anliegt. Außer einer guten Abdichtung in Schließstellung des Ventilkörpers wird der Ventilkörper durch das Zusammenwirken der konischen Flächen beim Schließvorgang zentriert. Ein Verkanten des Ventilkörpers wird dadurch verhindert.

In einer vorteilhaften Ausführungsform besteht der Ventilkörper wenigstens teilweise aus Metall oder einer Legierung oder einem Kunststoff oder einer Kombination dieser Materialien.

Wie bereits im Zusammenhang mit der Materialbeschaffenheit des Zugübertragungselementes beschrieben worden ist, kann durch die Wahl unterschiedlicher Materialien auch der Ventilkörper an verschiedene Anforderungsprofile der Verlängerungsvorrichtung angepasst werden. So weisen beispielsweise Ventilkörper aus Metall eine erhöhte Lebensdauer auf, während Ventilkörper aus Kunststoff kostengünstiger und leichter sind.

In einer weiteren vorteilhaften Ausführungsform der Verlängerungsvorrichtung weist der Ventilkörper mindestens ein Loch und/oder mindestens eine Nut auf. Diese Nuten und Löcher erstrecken sich vorzugsweise in Längsrichtung der Verlängerungseinheit. Löcher und/oder Nuten haben den Vorteil, dass damit Raum für den Durchtritt von Spritzmaterial geschaffen wird, wenn sich der Ventilkörper in Offenstellung befindet.

Die Außenquerschnittsabmessungen des Ventilkörpers können an die Abmessungen des Innenquerschnitts der Verlängerungseinheit angepasst sein, so dass der Ventilkörper in der Verlängerungseinheit geführt ist. In dieser Ausführung strömt das Spritzmaterial in Offenstellung des Ventilkörpers ausschließlich durch die Löcher und/oder Nuten, wobei die Nuten vorzugsweise in der Außenumfangsfläche des Ventilkörpers angeordnet sind.

Die Außenquerschnittsabmessungen des Ventilkörpers können kleiner sein als die Abmessungen des Innenquerschnitts der Verlängerungseinheit. In dieser Ausführungsform wird der Ventilkörper zwar nicht geführt, was aber den Vorteil hat, dass zwischen Ventilkörper und Wand der Verlängerungseinheit ausreichend Raum für den Durchtritt des Spritzmaterials zur Verfügung steht. Die Löcher und/oder Nuten bilden einen zusätzlichen Raum für den Durchtritt des Spritzmaterials, was insbesondere bei Verwendung von hochviskosen Materialien von Vorteil ist.

Löcher und/oder Nuten haben den weiteren Vorteil, dass der durch die Ventilöffnung vorgesehene Volumenstrom des Spritzmaterials zusätzlich eingestellt werden kann. Auch werden die Risiken eventuell auftretender Verstopfungen an dem Drossel- und Absperrventil durch das Vorsehen von Löchern oder Nuten verringert.

Vorzugsweise ist in Strömungsrichtung des zu verspritzenden Materials vor der Ventilöffnung ein Materialleitelement angeordnet. Das Materialleitelement lenkt den Materialstrom auf die Ventilöffnung, wodurch Toträume im Bereich vor dem Dosier- und Absperrventil vermieden werden und die Strömung des Materials begünstigt wird. Das Materialleitelement ist vorzugsweise integraler Bestandteil des Ventilsitzelements.

Vorzugsweise ist das Materialleitelement kegelstumpfförmig ausgebildet oder besitzt eine konische Innenfläche. Es wird dadurch ein konischer Hohlraum im Materialleitelement gebildet, der sich zur Ventilöffnung hin verjüngt.

In einer vorteilhaften Ausführungsform der Verlängerungsvorrichtung ist die Verlängerungseinheit ein Rohr.

Eine Verlängerungseinheit aus einem Rohr ist kostengünstig und schnell herzustellen. Rohre können verschiedene Wandstärken, Durchmesser und Querschnitte aufweisen, wodurch die Verlängerungseinheit an die unterschiedlichsten Spritzmaterialien und zu bearbeitenden Werkstücke angepasst werden kann. Das Rohr weist vorzugsweise einen kreisförmigen Querschnitt auf, wodurch ein wirbelfreier Durchfluss des Spritzmaterials durch die Verlängerungseinheit begünstigt wird.

Vorzugsweise ist mindestens eine Druckluftleitung vorgesehen, die innerhalb oder außerhalb der Verlängerungseinheit angeordnet sein kann.

Zur Strahlformung weist der Spritzkopf mindestens eine Luftdüse auf, die an die Druckluftleitung angeschlossen werden kann.

Vorzugsweise ist die Verlängerungseinheit doppelwandig ausgebildet. Vorzugsweise weist die Verlängerungseinheit eine Innenwand und eine Außenwand auf.

Die Innenwand und die Außenwand sind zur Ausbildung der Druckluftleitung vorzugsweise mindestens teilweise beabstandet zueinander angeordnet, insbesondere vollständig beabstandet zueinander angeordnet. Die vollständige beabstandete Anordnung der Wände bedeutet, dass die Wände über die gesamte Länge der Verlängerungseinheit beabstandet angeordnet sind.

Vorzugsweise sind die Innenwand und die Außenwand koaxial angeordnet.

Vorzugsweise ist die Außenwand ein Schlauch. Ein Schlauch hat den Vorteil, dass er auf einfache Weise über die Wandung der Verlängerungseinheit geschoben werden kann. Bei gekrümmten Verlängerungseinheiten kann ein teilweises Anliegen des Schlauchs an der Wandung nicht ausgeschlossen werden. In diesem Fall liegt eine teilweise beabstandete Anordnung der beiden Wände vor.

Die Erfindung betrifft auch einen Spritzapparat zum Versprühen von Spritzmaterial auf Oberflächen, wobei eine erfindungsgemäße Verlängerungsvorrichtung vorgesehen ist.

Dieser Spritzapparat weist die gleichen Vorteile auf, die bereits im Zusammenhang mit der erfindungsgemäßen Verlängerungsvorrichtung diskutiert wurden.

In einer vorteilhaften Ausführungsform des Spritzapparats ist die Betätigungseinrichtung mit dem Zugübertragungselement der Verlängerungsvorrichtung verbunden.

In einer weiteren vorteilhaften Ausführungsform des Spritzapparats weist die Betätigungseinrichtung einen beweglichen Kolben und eine Federeinrichtung auf. Dieser Kolben ist vorzugsweise ein- und ausfahrbar angeordnet. Das Zugübertragungselement ist vorzugsweise am Kolben befestigt.

Beispielhafte Ausführungsformen werden nachfolgend anhand der Zeichnungen näher erläutert. Es zeigen:
- Figuren 1a, b: Schnittdarstellungen der Verlängerungsvorrichtung mit einem Spritzapparat gemäß einer ersten Ausführungsform mit Dosier- und Absperrventil in Offen- und in Schließstellung,
- Figur 2: eine Verlängerungsvorrichtung mit einem Spritzapparat gemäß einer zweiten Ausführungsform,
- Figuren 3a - c: vergrößerte Schnittdarstellungen des ersten Endes einer Verlängerungseinheit mit Dosier- und Absperrventilen gemäß drei weiteren Ausführungsformen,
- Figur 4: eine Schnittdarstellung einer Verlängerungsvorrichtung mit einem Spritzapparat und einem Dosier- und Absperrventil gemäß Fig. 1a, b und einem Spritzkopf gemäß einer weiteren Ausführungsform,
- Figur 5: eine Schnittdarstellung einer Verlängerungsvorrichtung mit einem Spritzapparat gemäß einer weiteren Ausführungsform und
- Figur 6: eine Detaildarstellung des ersten Endes der Verlängerungseinrichtung gemäß der Figur 5.

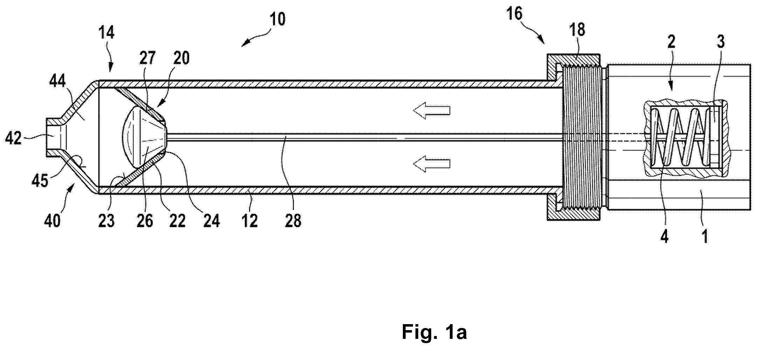

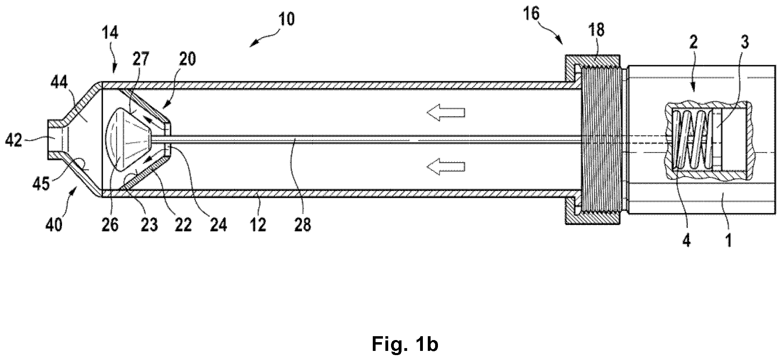

In der Figur 1a ist eine Verlängerungsvorrichtung 10 im Längsschnitt dargestellt, die an ihrem zweiten Ende 16 mittels Befestigungsmitteln 18, die z.B. ein Schraubgewinde aufweisen, an einem Spritzapparat 1 angeschlossen ist. Der Spritzapparat 1 ist in der Figur 1 schematisch dargestellt.

Am ersten Ende 14 trägt die Verlängerungseinheit 12 einen Spritzkopf 40, der eine Materialaustrittsdüse 42 aufweist. In der hier gezeigten Ausführungsform ist der Spritzkopf 40 kegelförmig ausgebildet und weist eine konische Innenfläche 45 auf. Der Spritzkopf 40 kann lösbar an der Verlängerungseinheit 12 angebracht sein, z. B. mittels eines Schraubgewindes, oder unlösbar befestigt sein, z. B. mittels Löten.

Am ersten Ende 14 ist innerhalb der Verlängerungseinheit 12 ein Dosier- und Absperrventil 20 angeordnet, das ein Ventilsitzelement 22 mit einer Ventilöffnung 24 aufweist. Zwischen dem Spritzkopf 40 und somit zwischen der Materialaustrittsdüse 42 und dem Ventilsitzelement 22 befindet sich ein Zwischenraum 44, in dem ein Ventilkörper 26 angeordnet ist, an dem ein Zugübertragungselement 28 befestigt ist. Das Zugübertragungselement 28 besteht aus einem biegsamen Material und kann z. B. ein Seil sein, und erstreckt sich vom Ventilkörper 26 durch die Ventilöffnung 24. Der Durchmesser der Ventilöffnung 24 ist größer als der Durchmesser des Zugübertragungselementes 28. Außerdem ist der Durchmesser der Ventilöffnung 24 kleiner als der maximale Durchmesser des Ventilkörpers 26.

Das Zugübertragungselement 28 erstreckt sich bis zum zweiten Ende 16 der Verlängerungseinheit 12 und reicht in den Spritzapparat 1 hinein, wo das Zugübertragungselement 28 mit einer Betätigungseinrichtung 2 des Spritzapparates 1 verbunden ist.

Diese Betätigungseinrichtung 2 ist schematisch dargestellt und weist einen beweglichen Kolben 3 auf, der mit einer Federeinrichtung 4 zusammenwirkt. Das Zugübertragungselement 28 ist am Kolben 3 befestigt.

In der in Fig. 1a dargestellten Schließstellung des Dosier- und Absperrventils 20 wird der Ventilkörper 26 durch die Einwirkung der Federeinrichtung 4 auf das Zugübertragungselement 28 gegen das Ventilsitzelement 22 gedrückt und dort gehalten. Folglich wird die Ventilöffnung 24 durch den Ventilkörper 26 verschlossen. In dieser Stellung kann kein Spritzmaterial aus der Verlängerungseinheit 12 durch die Ventilöffnung 24 in den Spritzkopf 40 gelangen.

Zum Öffnen der Ventilöffnung 24 wird der Kolben 3 vorzugsweise mittels Druckluft gegen die Kraft der Federeinrichtung 4 zurückbewegt, wodurch das Zugübertragungselement 28 entlastet wird. Der Druck des in die Verlängerungseinheit 12 eingepressten Materials reicht aus, um den Ventilkörper 26 in dessen Offenstellung zu bewegen (s. Fig. 1b).

Das zu verspritzende Material wird vom Spritzapparat 1 in die Verlängerungseinheit 12 eingetragen und strömt in Pfeilrichtung durch die Verlängerungseinheit 12 zur Ventilöffnung 24. Das durch die Ventilöffnung 24 gedrückte Material bewegt den Ventilkörper 26 bei entlastendem Zugübertragungselement 28 vom Ventilsitzelement 22 weg in Richtung Spritzkopf 40. Das zu verspritzende Material gelangt anschließend in den Zwischenraum 44 und kann durch die Materialaustrittsdüse 42 ausgetragen werden.

Das Ventilsitzelement 22 ist als Kegel ausgebildet und weist an seiner Innenseite eine erste konische Fläche 23 auf. Der Ventilkörper 26 weist eine zweite konische Fläche 27 auf, die an die erste konische Fläche 23 angepasst ist. Der Durchmesser des Ventilkörpers 26 ist kleiner als der Innendurchmesser der als kreisförmiges Rohr ausgebildeten Verlängerungseinheit 12, so dass ausreichend Raum zwischen dem Ventilkörper 26 und der Rohrwand für den Durchtritt des Spritzmaterials zur Verfügung steht.

Durch Betätigung der Betätigungseinrichtung 2 kann das Zugübertragungselement 28 zurückgezogen werden, so dass der Ventilkörper 26 mit seiner zweiten konischen Fläche 27 an der ersten konischen Fläche 23 des Ventilsitzelementes 22 anliegt und somit die Ventilöffnung 24 verschließt. Je nachdem, wie weit der Ventilkörper 26 mittels der Betätigungseinrichtung 2 in Richtung Ventilöffnung 24 gezogen wird, kann der Materialfluss durch die Ventilöffnung 24 gesteuert werden.

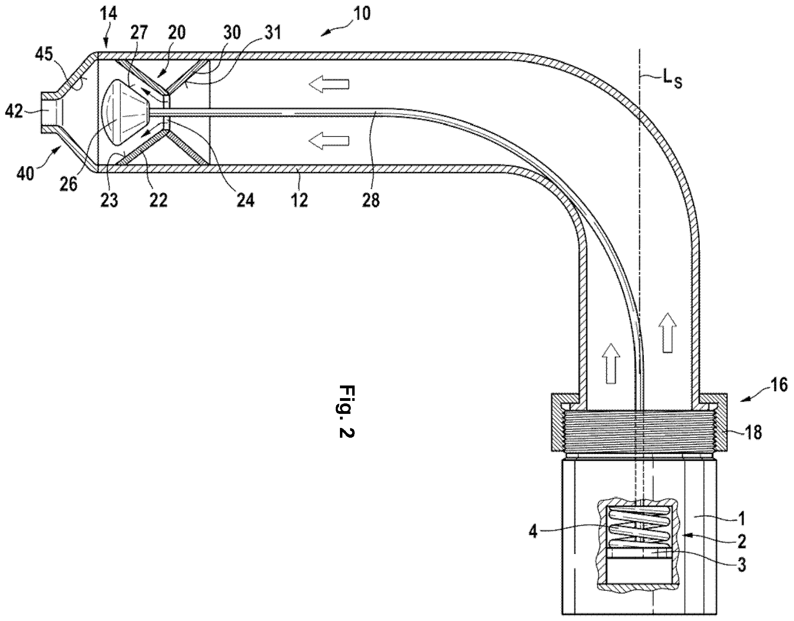

In der Figur 2 ist eine weitere Ausführungsform dargestellt, die eine gekrümmte Verlängerungseinheit 12 zeigt. Die Krümmung, d. h. die Abweichung von der Längsachse L_{S} des Spritzapparates 1, beträgt in dieser Ausführungsform 90°. Da das Zugübertragungselement 28 ein biegsames Element ist, passt sich das Zugübertragungselement 28 an die hier gezeigte 90°-Krümmung der Verlängerungseinheit 12 an. Die Funktionsweise des Dosier- und Absperrventils 20 erfolgt in gleicher Weise wie in der Ausführungsform der Figuren 1a und b. Die Verlängerungseinheit 12 kann auch mehrere beliebige Krümmungen aufweisen. Die Länge der Verlängerungseinheit 12 kann mehrere Meter betragen. Längen bis zu 10 m sind möglich.

Zusätzlich ist an dem Ventilsitzelement 22 noch ein Materialleitelement 30 angeordnet, das in der hier gezeigten Ausführungsform kegelförmig ausgebildet ist und eine konische Innenfläche 31 aufweist. Das Materialleitelement 30 verjüngt sich in Richtung Ventilöffnung 24, so dass das ankommende Material zur Ventilöffnung 24 gelenkt wird. Dadurch werden Toträume im Bereich des Ventilsitzelementes 22 vermieden, in denen sich das zu verspritzende Material stauen und ablagern könnte.

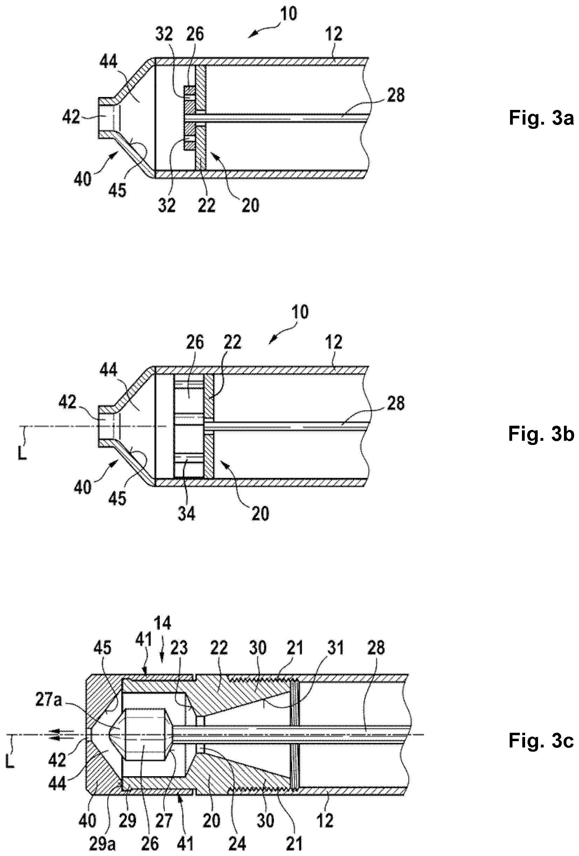

In der Figur 3a ist eine weitere Ausführungsform des Dosier- und Absperrventils 20 dargestellt. Das Ventilsitzelement 22 besteht aus einer Ringscheibe und der Ventilkörper 26 aus einem Ventilteller. Um den Materialfluss im geöffneten Zustand des Dosier- und Absperrventils 20 zu verbessern, weist der Ventilteller zusätzlich Löcher 32 auf.

In der Figur 3b ist eine weitere Ausführungsform des Dosier- und Absperrventils 20 dargestellt, wobei der Außendurchmesser des Ventilkörpers 26 im Wesentlichen dem Innendurchmesser der Verlängerungseinheit 12 entspricht, so dass der Ventilkörper 26 von der Verlängerungseinheit 12 geführt wird. Um den Materialfluss in Richtung Materialaustrittsdüse 42 zu ermöglichen, besitzt der Ventilkörper 26 an seiner Außenumfangsfläche Nuten 34, die sich parallel zur Längsachse L des Spritzkopfes 40 erstrecken.

Löcher 32 und Nuten 34 können im Ventilkörper 26 auch kombiniert sein.

In der Figur 3c ist eine weitere Ausführungsform dargestellt, bei der das Dosier- und Absperrventil 20 am ersten Ende 14 der Verlängerungseinheit 12 angeordnet ist. Der Spritzkopf 40 ist an dem Dosier- und Absperrventil 20 angeordnet.

Das Ventilsitzelement 22 ist lösbar mit der Verlängerungseinheit 12 und der Spritzkopf 40 lösbar mit dem Ventilsitzelement 22 verbunden sind. Die Verbindung von Ventilsitzelement 22 und Verlängerungseinheit 12 erfolgt beispielsweise mittels Schraubverbindung 21, wohingegen die Verbindung zwischen Ventilsitzelement 22 und Spritzkopf 40 durch eine Steckverbindung 41 oder eine Klemmverbindung realisiert wird. Am Spritzkopf 40 ist für diese Steckverbindung 41 ein hülsenförmiges Rohr angeordnet. Das Materialleitelement 30 ist in das Ventilsitzelement 22 integriert. Das Materialleitelement 30 weist eine konische Innenfläche 31 auf, wodurch ein Hohlraum gebildet wird, der sich zur Ventilöffnung 24 hin verjüngt. Das Ventilelement 22 weist eine erste konische Fläche 23 auf, die an die zweite konische Fläche 27 des Ventilkörpers 26 angepasst sind.

An die erste konische Fläche 23 schließt sich ein hülsenförmiger Abschnitt 29 an, der sich in Richtung Spritzkopf 40 erstreckt.

Der Ventilkörper 26 ist zylindrisch ausgebildet und weist einen kleineren Durchmesser auf als der Innendurchmesser des hülsenförmigen Abschnitts 29. An dem dem Spritzkopf 40 zugewandten Ende besitzt der Ventilkörper 26 eine kegelförmige Spitze 27a, mit der der Ventilkörper 26 in seiner Offenstellung in den Spritzkopf 40 hineinragt. Der Spritzkopf 40 liegt an der Stirnfläche 29a des hülsenförmigen Abschnitts 29 an. Zwischen der konischen Innenfläche 45 des Spritzkopfes 40 und der kegelförmigen Spitze 27a des Ventilkörpers 26 wird ein kegelförmiger Zwischenraum 44 gebildet. Der Zwischenraum 44 bleibt auch dann erhalten, wenn der Ventilkörper 26 seinen maximalen Abstand von der konischen Fläche 23 eingenommen hat.

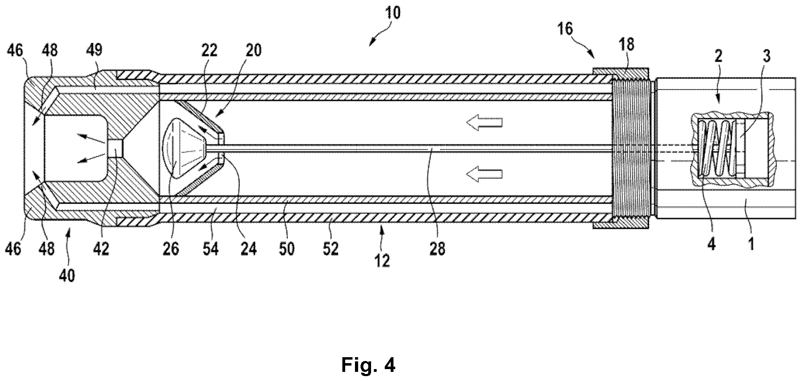

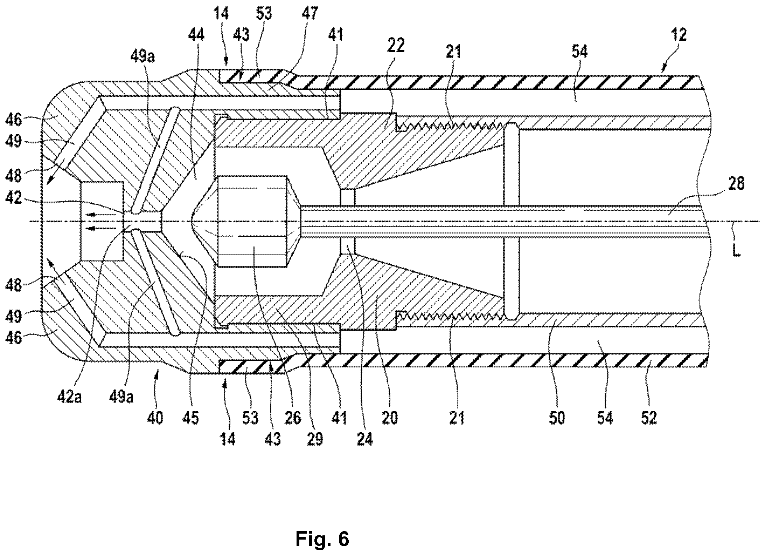

In der Figur 4 ist eine weitere Ausführungsform dargestellt, in der die Verlängerungseinheit 12 doppelwandig ausgebildet ist. Die Verlängerungseinheit 12 weist eine Innenwand 50 und eine Außenwand 52 auf, wobei beide Wände beabstandet zueinander angeordnet sind, so dass zwischen Innenwand 50 und Außenwand 52 eine Druckluftleitung 54 in Gestalt eines ringförmigen Kanals gebildet werden kann, wie dies auch in der vergrößerten Detaildarstellung in der Figur 6 zu sehen ist. Im Spritzapparat 1 sind entsprechende Anschlüsse (nicht dargestellt) vorgesehen, um Druckluft in diesen Kanal einleiten zu können.

Die Außenwand 52 wird vorzugsweise durch einen Schlauch gebildet, der über die Innenwand 50, die aus einem Metallrohr bestehen kann, geschoben ist.

Der Spritzkopf 40 weist Hörner 46 mit Luftdüsen 48 auf. Die Druckluftleitung 54 ist über einen Luftkanal 49 an diese Luftdüsen 48 angeschlossen, so dass eine Strahlformung des Spritzmaterials mit verschiedenen Strahlgeometrien realisiert werden kann.

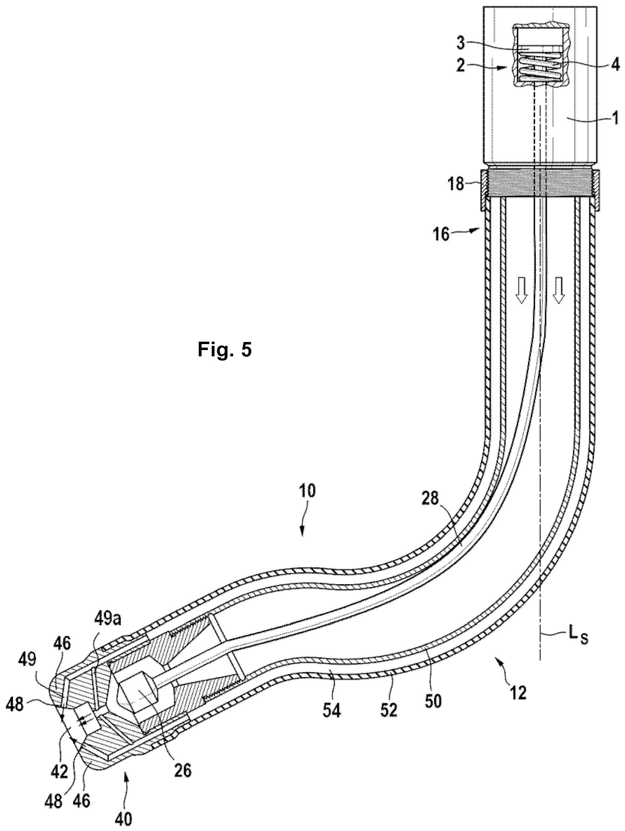

In der Figur 5 ist eine weitere Ausführungsform dargestellt, in der die Verlängerungseinheit 12 ebenfalls doppelwandig ausgebildet ist und zusätzlich zwei Krümmungen aufweist. Die doppelwandige Ausführungsform der Verlängerungseinheit 12 ist dabei derart ausgebildet, dass unabhängig der Krümmungen die Innenwand 50 und der Außenwand 52 stets beabstandet zueinander angeordnet sind, so dass zwischen den beiden Wänden die Druckluftleitung 54 in Gestalt eines ringförmigen und gekrümmten Kanals gebildet werden kann.

Auch in dieser Ausführungsform weist der Spritzkopf 40 Hörner 46 mit Luftdüsen 48 auf. Die Druckluftleitung 54 ist an diese Luftdüsen 48 angeschlossen, so dass ebenfalls eine Strahlformung des Spritzmaterials mit verschiedenen Strahlgeometrien realisiert werden kann.

In der Figur 6 ist eine Detaildarstellung des ersten Endes 14 der Verlängerungseinheit 12 der Fig. 5 abgebildet. Das Ventilsitzelement 22 des Dosier- und Absperrventils 20, das der Ausführungsform der Fig. 3c entspricht, ist lösbar mit der Verlängerungseinheit 12 und der Spritzkopf 40 ist lösbar mit dem Ventilsitzelement 22 verbunden. Der Ventilkörper 26 mit dem Zugübertragungselement 28 entspricht ebenfalls der Ausführungsform der Fig. 3c. Die Verbindung von Ventilsitzelement 22 und Verlängerungseinheit 12 erfolgt wiederum mittels Schraubverbindung 21, wohingegen die Verbindung zwischen Ventilsitzelement 22 und Spritzkopf 40 durch eine einfache Steck- und/oder Klemmverbindung 41 realisiert wird. Auch bei dieser Ausführungsform ist für die Steck- und/oder Klemmverbindung 41 ein hülsenförmiger Abschnitt 47 am Spritzkopf 40 angeordnet.

Der Spritzkopf 40 weist zwei Hörner 46 mit Luftdüsen 48 auf, die in Materialströmungsrichtung hinter der Materialaustrittsdüse 42 angeordnet sind. Desweiteren ist die Verlängerungseinheit 12 doppelwandig ausgebildet, wobei die Druckluftleitung 54 in die Luftkanäle 49 des Spritzkopfes 40 mündet, an deren Ende die Luftdüsen 48 angeordnet sind. Von den Luftkanälen 49 zweigen Luftkanäle 49a ab, die in einen vor der Materialaustrittsdüse 42 angeordneten Materialkanal 42a münden. Somit kann eine Strahlformung mit verschiedenen Strahlgeometrien realisiert werden.

Über eine Klemmverbindung 43 ist die Außenwand 52 lösbar mit dem Spritzkopf 40 verbunden und schließt die Druckluftleitung 54 luftdicht ab. Der hülsenförmige Abschnitt 47 ist zwischen dem Endabschnitt 53 der Außenwand 52 und dem hülsenförmigen Abschnitt 29 des Ventilelements 22 angeordnet. Der Spritzkopf weist ähnlich der Fig. 3c eine konische Innenfläche 45 auf.

### Bezugszeichenliste

- 1: Spritzapparat
- 2: Betätigungseinrichtung
- 3: Kolben
- 4: Federeinrichtung

- 10: Verlängerungsvorrichtung
- 12: Verlängerungseinheit
- 14: erstes Ende
- 16: zweites Ende
- 18: Befestigungsmittel

- 20: Dosier- und Absperrventil
- 21: Schraubverbindung
- 22: Ventilsitzelement
- 23: erste konische Fläche
- 24: Ventilöffnung
- 26: Ventilkörper
- 27: zweite konische Fläche
- 27a: Spitze
- 28: Zugübertragungselement
- 29: hülsenförmiger Abschnitt
- 29a: Stirnfläche

- 30: Materialleitelement
- 31: Innenfläche
- 32: Loch
- 34: Nut

- 40: Spritzkopf
- 41: Steckverbindung
- 42: Materialaustrittsdüse
- 42a: Materialkanal
- 43: Klemmverbindung
- 44: Zwischenraum
- 45: Innenfläche
- 46: Horn
- 47: hülsenförmiger Abschnitt
- 48: Luftdüse
- 49: Luftkanal
- 49a: Luftkanal

- 50: Innenwand
- 52: Außenwand
- 53: Endabschnitt
- 54: Druckluftleitung

- L: Längsachse
- L_{S}: Längsachse des Spritzapparates

## Patentansprüche

1. Verlängerungsvorrichtung (10) für Spritzapparate (1) mit einer Verlängerungseinheit (12), die an einem ersten Ende (14) einen Spritzkopf (40) mit mindestens einer Materialaustrittsdüse (42) und an einem zweiten Ende (16) Mittel zum Anschließen eines Spritzapparates (1) aufweist,
wobei die Verlängerungseinheit (12) ein Dosier - und Absperrventil (20) aufweist, das ein Ventilsitzelement (22) mit einer Ventilöffnung (24) und einen Ventilkörper (26) aufweist,
wobei der Ventilkörper (26) zwischen dem Spritzkopf (40) und dem Ventilsitzelement (22) angeordnet ist, und
wobei der Ventilkörper (26) an einem Zugübertragungselement (28) befestigt ist, das sich durch die Ventilöffnung (24) erstreckt,
**dadurch gekennzeichnet,**
**dass** das Zugübertragungselement (28) aus einem biegsamen Material besteht.

2. Verlängerungsvorrichtung (10) nach Anspruch 1, **dadurch gekennzeichnet, dass** das Dosier- und Absperrventil (20) im oder am ersten Ende (14) der Verlängerungseinheit (12) angeordnet ist.

3. Verlängerungsvorrichtung (10) nach einem der Ansprüche 1 oder 2, **dadurch gekennzeichnet, dass** das Zugübertragungselement (28) mit einer im Spritzapparat (1) angeordneten Betätigungseinrichtung (2) verbindbar ist.

4. Verlängerungsvorrichtung (10) nach einem der Ansprüche 1 bis 3, **dadurch gekennzeichnet, dass** das Zugübertragungselement (28) aus einem Seil, Kabel, Draht oder einer Kette besteht.

5. Verlängerungsvorrichtung (10) nach einem der Ansprüche 1 bis 4, **dadurch gekennzeichnet, dass** die Verlängerungseinheit (12) wenigstens teilweise gekrümmt ist.

6. Verlängerungsvorrichtung (10) nach einem der Ansprüche 1 bis 5, **dadurch gekennzeichnet, dass** das Ventilsitzelement (22) eine Ringscheibe und der Ventilkörper (26) ein Ventilteller ist.

7. Verlängerungsvorrichtung (10) nach einem der Ansprüche 1 bis 5, **dadurch gekennzeichnet, dass** das Ventilsitzelement (22) und der Ventilkörper (26) jeweils eine kegelförmige oder kegelstumpfförmige Gestalt aufweisen.

8. Verlängerungsvorrichtung (10) nach Anspruch 7, **dadurch gekennzeichnet, dass** das Ventilsitzelement (22) eine erste konische Fläche (23) und der Ventilkörper (26) eine zweite konische Fläche (27) aufweisen, wobei der Ventilkörper (26) in Schließstellung mit der zweiten konischen Fläche (27) an der ersten konischen Fläche (23) anliegt.

9. Verlängerungsvorrichtung (10) nach einem der Ansprüche 1 bis 8, **dadurch gekennzeichnet, dass** der Ventilkörper (26) mindestens ein Loch (32) und/oder mindestens eine Nut (34) aufweist.

10. Verlängerungsvorrichtung (10) nach einem der Ansprüche 1 bis 9, **dadurch gekennzeichnet, dass** in Strömungsrichtung des Spritzmaterials vor der Ventilöffnung (24) ein Materialleitelement (30) angeordnet ist.

11. Verlängerungsvorrichtung (10) nach einem der Ansprüche 1 bis 10, **dadurch gekennzeichnet, dass** mindestens eine Druckluftleitung (54) vorgesehen ist.

12. Verlängerungsvorrichtung (10) nach einem der Ansprüche 1 bis 11, **dadurch gekennzeichnet, dass** die Verlängerungseinheit (12) eine Innenwand (50) und eine Außenwand (52) aufweist.

13. Verlängerungsvorrichtung (10) nach Anspruch 12, **dadurch gekennzeichnet, dass** die Innenwand (50) und die Außenwand (52) zur Ausbildung der Druckluftleitung (54) mindestens teilweise beabstandet zueinander angeordnet sind.

14. Verlängerungsvorrichtung (10) nach einem der Ansprüche 12 oder 13, **dadurch gekennzeichnet, dass** die Außenwand (52) ein Schlauch ist.

15. Verlängerungsvorrichtung (10) nach einem der Ansprüche 11 bis 14, **dadurch gekennzeichnet, dass** der Spritzkopf (40) mindestens eine Luftdüse (48) aufweist, die an die Druckluftleitung (54) angeschlossen ist.

16. Spritzapparat (1) zum Versprühen von Spritzmaterial auf Oberflächen mit einer Verlängerungsvorrichtung (10) gemäß Anspruch 1.

17. Spritzapparat (1) nach Anspruch 16, **dadurch gekennzeichnet, dass** das Zugübertragungselement (28) mit einer Betätigungseinrichtung (2) des Spritzapparates (1) verbunden ist.

18. Spritzapparat (1) nach Anspruch 16 oder 17, **dadurch gekennzeichnet, dass** die Betätigungseinrichtung (2) einen beweglichen Kolben (3) und eine Federeinrichtung (4) aufweist.

## Claims

1. Extension device (10) for spraying apparatuses (1), comprising an extension unit (12) that comprises, at a first end (14), a spray head (40) that has at least one material outlet nozzle (42) and, at a second end (16), means for connecting a spraying apparatus (1), the extension unit (12) comprising a metering and shut-off valve (20) that comprises a valve seat member (22) having a valve opening (24) and a valve body (26), the valve body (26) being positioned between the spray head (40) and the valve seat member (22), and the valve body (26) being fastened to a tension-transmitting member (28) that extends through the valve opening (24), **characterised in that** the tension-transmitting member (28) consists of flexible material.

2. Extension device (10) according to claim 1, **characterised in that** the metering and shut-off valve (20) is arranged in or at the first end (14) of the extension unit (12).

3. Extension device (10) according to either claim 1 or claim 2, **characterised in that** the tension-transmitting member (28) can be connected to an actuator (2) arranged in the spraying apparatus (1).

4. Extension device (10) according to any one of claims 1 to 3, **characterised in that** the tension-transmitting member (28) consists of a rope, cable, wire or a chain.

5. Extension device (10) according to any one of claims 1 to 4, **characterised in that** the extension unit (12) is at least partially curved.

6. Extension device (10) according to any one of claims 1 to 5, **characterised in that** the valve seat member (22) is an annular disc and the valve body (26) is a valve plate.

7. Extension device (10) according to any one of claims 1 to 5, **characterised in that** the valve seat member (22) and the valve body (26) each have a conical or frustoconical shape.

8. Extension device (10) according to claim 7, **characterised in that** the valve seat member (22) comprises a first conical surface (23) and the valve body (26) comprises a second conical surface (27), the second conical surface (27) of the valve body (26), in a closed position, coming into contact with the first conical surface (23).

9. Extension device (10) according to any one of claims 1 to 8, **characterised in that** the valve body (26) comprises at least one hole (32) and/or at least one groove (34).

10. Extension device (10) according to any one of claims 1 to 9, **characterised in that** a material guide member (30) is arranged upstream of the valve opening (24) in the flow direction of the spray material.

11. Extension device (10) according to any one of claims 1 to 10, **characterised in that** at least one compressed air line (54) is provided.

12. Extension device (10) according to any one of claims 1 to 11, **characterised in that** the extension unit (12) comprises an inner wall (50) and an outer wall (52).

13. Extension device (10) according to claim 12, **characterised in that** the inner wall (50) and the outer wall (52) are arranged at least partially spaced apart from one another to form the compressed air line (54).

14. Extension device (10) according to either claim 12 or claim 13, **characterised in that** the outer wall (52) is a hose.

15. Extension device (10) according to any one of claims 11 to 14, **characterised in that** the spray head (40) comprises at least one air nozzle (48), which is connected to the compressed air line (54).

16. Spraying apparatus (1) for spraying spay material onto surfaces, said spraying apparatus comprising an extension device (10) according to claim 1.

17. Spraying apparatus (1) according to claim 16, **characterised in that** the tension-transmitting member (28) is connected to an actuator (2) of the spraying apparatus (1).

18. Spraying apparatus (1) according to either claim 16 or claim 17, **characterised in that** the actuator (2) comprises a movable piston (3) and a spring mechanism (4).

## Revendications

1. Dispositif prolongateur (10) pour appareil de pulvérisation (1) doté d'une unité de prolongation (12) comportant à une première extrémité (14) une tête de pulvérisation (40) avec au moins une buse de sortie de matériau (42) et à une seconde extrémité (16) un moyen de connexion d'un appareil de pulvérisation (1), dans lequel l'unité de prolongation (12) comporte une vanne de dosage et d'arrêt (20), comportant un élément de siège de vanne (22) avec une ouverture de vanne (24) et un corps de vanne (26), dans lequel le corps de vanne est agencé entre la tête de pulvérisation (40) et l'élément de siège de vanne (22), et dans lequel le corps de vanne (26) est fixé à un élément de traction (28) qui s'étend dans l'ouverture de vanne (24), **caractérisé en ce que** l'élément de traction (28) est constitué d'un matériau flexible.

2. Dispositif prolongateur (10) selon la revendication 1, **caractérisé en ce que** la vanne de dosage et d'arrêt (20) est arrangée dans ou à la première extrémité de l'unité de prolongation (12).

3. Dispositif prolongateur (10) selon l'une des revendications 1 ou 2, **caractérisé en ce que** l'élément de traction (28) peut être relié à un dispositif d'actionnement (2) disposé dans l'appareil de pulvérisation (1).

4. Dispositif prolongateur (10) selon l'une des revendications 1 à 3, **caractérisé en ce que** l'élément de traction (28) consiste en une corde, un câble, un fil ou une chaîne.

5. Dispositif prolongateur (10) selon l'une des revendications 1 à 4, **caractérisé en ce que** l'unité de prolongation (12) est au moins en partie courbée.

6. Dispositif prolongateur (10) selon l'une des revendications 1 à 5, **caractérisé en ce que** l'élément de siège de vanne (22) est une rondelle d'étanchéité et le corps de vanne (26) est une tête de soupape.

7. Dispositif prolongateur (10) selon l'une des revendications 1 à 5, **caractérisé en ce que** l'élément de siège de vanne (22) et le corps de vanne (26) présentent chacun une forme conique ou tronconique.

8. Dispositif prolongateur (10) selon la revendication 7, **caractérisé en ce que** l'élément de siège de vanne (22) comporte une première surface conique (23) et le corps de vanne (26) comporte une seconde surface conique (27), le corps de vanne (26) étant, en position fermée, adjacent par la seconde surface conique (27) à la première surface conique (23) .

9. Dispositif prolongateur (10) selon l'une des revendications 1 à 8, **caractérisé en ce que** l'élément de siège de vanne (26) comporte au moins un trou (32) et/ou au moins une rainure (34).

10. Dispositif prolongateur (10) selon l'une des revendications 1 à 9, **caractérisé en ce qu'**un élément matériel de guidage (30) est disposé avant l'ouverture de vanne (24), dans le sens du courant du matériau à pulvériser.

11. Dispositif prolongateur (10) selon l'une des revendications 1 à 10, **caractérisé en ce qu'**au moins une conduite d'air comprimé (54) est prévue.

12. Dispositif prolongateur (10) selon l'une des revendications 1 à 11, **caractérisé en ce que** l'unité de prolongation (12) comporte une paroi interne (50) et une paroi externe (52).

13. Dispositif prolongateur (10) selon la revendication 12, **caractérisé en ce que** la paroi interne (50) et la paroi externe (52) sont arrangées pour être espacées au moins partiellement de façon à former la conduite d'air comprimé (54).

14. Dispositif prolongateur (10) selon l'une des revendications 12 ou 13, **caractérisé en ce que** la paroi externe (52) est un tuyau.

15. Dispositif prolongateur (10) selon l'une des revendications 11 à 14, **caractérisé en ce que** la tête de pulvérisation (40) comporte au moins une buse à air (48) reliée à la ligne pneumatique (54).

16. Appareil de pulvérisation (1) pour pulvériser un matériau sur des surfaces, doté d'un dispositif prolongateur (10) d'après la revendication 1.

17. Appareil de pulvérisation (1) selon la revendication 16, **caractérisé en ce que** l'élément de traction (28) est relié à un dispositif d'actionnement (2) de l'appareil de pistolage (1).

18. Appareil de pistolage (1) selon l'une des revendications 16 ou 17, **caractérisé en ce que** le dispositif d'actionnement (2) comporte un piston mobile (3) et un dispositif de ressort (4).
